(19) Europäisches Patentamt / European Patent Office / Office européen des brevets

(11) **EP 3 428 813 A1**

(12) **EUROPEAN PATENT APPLICATION**

(43) Date of publication:
16.01.2019 Bulletin 2019/03

(51) Int Cl.:
*G06F 17/30* *(2019.01)*

(21) Application number: 18182605.8

(22) Date of filing: 10.07.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2017 US 201715645843**

(71) Applicant: **Informatica LLC**
**Redwood City, CA 94063-4755 (US)**

(72) Inventors:
• **KUMARESAN, Bala**
**Redwood City, CA 94063 (US)**
• **BALABINE, Igor**
**Redwood City, CA 94063 (US)**

(74) Representative: **Boult Wade Tennant LLP**
**Verulam Gardens**
**70 Gray's Inn Road**
**London WC1X 8BT (GB)**

(54) **METHOD, APPARATUS, AND COMPUTER-READABLE MEDIUM FOR DETERMINING A DATA DOMAIN OF A DATA OBJECT**

(57) A system, method and computer-readable medium for determining a data domain of a data object, comprising, for each data object in one or more data objects, computing one or more syntactic match probabilities corresponding to one or more data domains, each syntactic match probability being based at least in part on a syntactic distance, determining a plurality of characteristic probability values corresponding to each data domain in the one or more data domains, determining a probability of the data object belonging to each of the one or more data domains based on a syntactic match probability corresponding to each data domain and the plurality of characteristic probability values corresponding to each data domain, and determining a data domain in the one or more data domains which corresponds to the data object based at least in part on the probability associated with each of the one or more data domains.

**EP 3 428 813 A1**

**Description**

**RELATED APPLICATION DATA**

This application is a continuation-in-part of Application No. 15/591,661, filed May 10, 2017 and titled "METHOD, APPARATUS, AND COMPUTER-READABLE MEDIUM FOR AUTOMATED CONSTRUCTION OF DATA MASKS," which is itself a continuation-in-part of Application No. 15/161,586, filed May 23, 2016 and titled "METHOD, APPARATUS, AND COMPUTER-READABLE MEDIUM FOR MASKING DATA," the disclosures of which are hereby incorporated by reference in their entirety.

**BACKGROUND**

Determination of data object properties, such as syntax and semantics, is a fundamental feature of all data management products. Knowledge of a data object's properties enables correct data manipulation and processing. Knowledge of the data object's properties also enables establishment of proper security controls for that data. For example, data masking, or redacting, is an important data management technology which prevents access to sensitive data by unauthorized users. In order to properly mask a data element, the masking application should be knowledgeable of at least the data element's syntax.

The process of discovering data object's syntax and semantics is commonly referred to as "data profiling." A traditional data profiling application takes a "metadata + data" approach in which at first it makes an attempt of gleaning the data object's type or domain from the available metadata and then tries to match data object's internal structure to a collection of known syntactic patterns each of which is associated with a semantic category such as US Social Security Number, credit card number, geographic location, etc.

This traditional data objects profiling approach suffers from uncertainty in the metadata assessment: there are no metadata naming conventions or rules. For example, a database column containing ABA routing numbers may not contain any indication of its content in its name and be called something like "FI" - an acronym for "Financial Institution". Furthermore, metadata may be totally misleading. For example, a database column containing "SSN" in its name may not contain US Social Security Numbers as the name may imply but rather a hull classification of a nuclear powered general purpose attack submarine (e.g. SSN-774 - the Virginia class).

The traditional approach to profiling data objects typically uses regular expressions ("RegExp") which provide a binary "match" or "no match" answer when assessing said data object's syntax. The RegExp-based approach does not produce any indicative result when data object's syntax is even slightly different from the template. Also, due to its binary nature, the RegExp-based profiling approach is incapable of providing hints on a direction in which data object's type and domain discovery may proceed.

The above limitations of traditional data profiling methods lead to bloated and often imprecise data discovery tools which are hard to extend and manage. Furthermore, inability to discern data object's syntax using traditional RegExp-based methods impedes the ability to protect said data object by the means of format preserving methods such as format preserving masking or format preserving encryption, thus creating unnecessary security risks with potentially costly consequences.

Accordingly, improvements are needed in systems for data profiling masking data while preserving formatting in a deterministic fashion such that each instance of an original data element when transformed by the data masking system under the same conditions results in the same masked data element having the same format.

**SUMMARY OF THE INVENTION**

According to an aspect of the invention, there is provided a method executed by one or more computing devices for determining a data domain of a data object, the method comprising, for each data object in one or more data objects: computing one or more syntactic match probabilities corresponding to one or more data domains, each syntactic match probability being based at least in part on a syntactic distance between the data object and a syntactic definition of a corresponding data domain; determining a plurality of characteristic probability values corresponding to each data domain in the one or more data domains, wherein each characteristic probability value corresponds to a probability of the data object having a characteristic of a corresponding data domain; determining a probability of the data object belonging to each of the one or more data domains based at least in part on a syntactic match probability corresponding to each data domain and the plurality of characteristic probability values corresponding to each data domain; and determining a data domain in the one or more data domains which corresponds to the data object based at least in part on the probability of the data object belonging to each of the one or more data domains.

The method may further comprise, for each data object in the one or more data objects: determining one or more ratios of syntactic variations corresponding to the one or more domains, wherein each ratio of syntactic variations comprises a quantity of syntactic variations corresponding to each data domain divided by a total quantity of data domains; determining one or more contextual coefficients corresponding to the one or more data domains based at least in part on a comparison of one or more contextual factors associated with_the data object and the corresponding one or more contextual factors associated with each data domain; and determining one or more quality coefficients corresponding to the one or more data domains, wherein each quality coefficient corresponding to each data domain indicates a likelihood that a data object matched to the data domain belongs to the data domain; wherein the probability of the data object belonging to each of the one or more data domains is determined based at least in part on a ratio of syntactic variations corresponding to each data domain, a contextual coefficient corresponding to each data domain, a quality coefficient corresponding to each data domain, the syntactic match probability corresponding to each data domain, and the plurality of characteristic probability values corresponding to each data domain. The one or more contextual factors may comprise one or more of: metadata associated with the data object or a characteristic of a data store associated with the data object. The probability of the data object belonging to each of the one or more data domains may comprise a product of the ratio of syntactic variations corresponding to each data domain, the contextual coefficient corresponding to each data domain, the quality coefficient corresponding to each data domain, the divergence factor corresponding to each data domain, and the plurality of characteristic probability values corresponding to each data domain.

In some embodiments, the syntactic definition corresponding to each data domain comprises one or more alphabets and a positional map and each position in the positional map corresponds to an alphabet in the one or more alphabets. The syntactic distance between the data object and the syntactic definition corresponding to each data domain may then be computed by: initializing the syntactic distance to zero; incrementing the syntactic distance by one for every character in the data object which does not occur in an alphabet corresponding to a position of the character in the positional map; and incrementing the syntactic distance by a length differential between a length of the data object and a length of the positional map.

In some embodiments, the one or more data objects comprise a plurality of data objects and the method further comprises: computing at least one metric of data quality for at least one data domain in the one or more data domains based at least in part on a plurality of probabilities of the plurality of data objects belonging to the at least one data domain. Computing at least one metric of data quality for at least one data domain in the one or more data domains may comprise: computing a standard deviation of a plurality of probabilities of the plurality of data objects belonging to the at least one data domain in the one or more data domains; computing a $t$ value based at least in part on the standard deviation and a mean probability of the plurality of probabilities; determining a degree of correlation between the plurality of data objects and the data domain based at least in part on a $t$-distribution and the t value; determining at least one metric of data quality for at the least one data domain based at least in part on the degree of correlation. The one or more data domains may comprise a first plurality of data domains and a second plurality of data domains and computing at least one metric of data quality for at least one data domain in the one or more data domains may then comprise: computing a first plurality of metrics of data quality for the first plurality of data domains; and computing a second plurality of metrics of data quality for the second plurality of data domains. In this case, the method may further comprise: determining a similarity between the first plurality of data domains and the second plurality of data domains based at least in part on the first plurality of metrics of data quality and the second plurality of metrics of data quality.

According to an aspect of the invention, there is provided an apparatus for determining a data domain of a data object, the apparatus comprising: one or more processors; and one or more memories operatively coupled to at least one of the one or more processors and having instructions stored thereon that, when executed by at least one of the one or more processors, cause at least one of the one or more processors to, for each data object in one or more data objects: compute one or more syntactic match probabilities corresponding to one or more data domains, each syntactic match probability being based at least in part on a syntactic distance between the data object and a syntactic definition of a corresponding data domain; determine a plurality of characteristic probability values corresponding to each data domain in the one or more data domains, wherein each characteristic probability value corresponds to a probability of the data object having a characteristic of a corresponding data domain; determine a probability of the data object belonging to each of the one or more data domains based at least in part on a syntactic match probability corresponding to each data domain and the plurality of characteristic probability values corresponding to each data domain; and determine a data domain in the one or more data domains which corresponds to the data object based at least in part on the probability of the data object belonging to each of the one or more data domains.

In some embodiments, at least one of the one or more memories has further instructions stored thereon that, when executed by at least one of the one or more processors, cause at least one of the one or more processors to, for each data object in the one or more data objects: determine one or more ratios of syntactic variations corresponding to the one or more domains, wherein each ratio of syntactic variations comprises a quantity of syntactic variations corresponding to each data domain divided by a total quantity of data domains; determine one or more contextual coefficients corresponding to the one or more data domains based at least in part on a comparison of one or more contextual factors associated with_the data object and the corresponding one or more contextual factors associated with each data domain; and determine one or more quality coefficients corresponding to the one or more data domains, wherein each quality coefficient corresponding to each data domain indicates a likelihood that a data object matched to the data domain belongs to the data domain; wherein the probability of the data object belonging to each of the one or more data domains is determined based at least in part on a ratio of syntactic variations corresponding to each data domain, a contextual coefficient corresponding to each data domain, a quality coefficient corresponding to each data domain, the syntactic match probability corresponding to each data domain, and the plurality of characteristic probability values corresponding to each data domain. The one or more contextual factors may comprise one or more of: metadata associated with the data object or a characteristic of a data store associated with the data object. The probability of the data object belonging to each of the one or more data domains may comprise a product of the ratio of syntactic variations corresponding to each data domain, the contextual coefficient corresponding to each data domain, the quality coefficient corresponding to each data domain, the divergence factor corresponding to each data domain, and the plurality of characteristic probability values corresponding to each data domain.

In some embodiments, the syntactic definition corresponding to each data domain comprises one or more alphabets and a positional map and wherein each position in the positional map corresponds to an alphabet in the one or more alphabets. The syntactic distance between the data object and the syntactic definition corresponding to each data domain may be computed by: initializing the syntactic distance to zero; incrementing the syntactic distance by one for every character in the data object which does not occur in an alphabet corresponding to a position of the character in the positional map; and incrementing the syntactic distance by a length differential between a length of the data object and a length of the positional map.

In some embodiments, the one or more data objects comprise a plurality of data objects and at least one of the one or more memories has further instructions stored thereon that, when executed by at least one of the one or more processors, cause at least one of the one or more processors to: compute at least one metric of data quality for at least one data domain in the one or more data domains based at least in part on a plurality of probabilities of the plurality of data objects belonging to the at least one data domain. The instructions that, when executed by at least one of the one or more processors, cause at least one of the one or more processors to compute at least one metric of data quality for at least one data domain in the one or more data domains may further cause at least one of the one or more processors to: compute a standard deviation of a plurality of probabilities of the plurality of data objects belonging to the at least one data domain in the one or more data domains; compute a t value based at least in part on the standard deviation and a mean probability of the plurality of probabilities; determine a degree of correlation between the plurality of data objects and the data domain based at least in part on a t-distribution and the t value; determine at least one metric of data quality for at the least one data domain based at least in part on the degree of correlation. The one or more data domains may comprise a first plurality of data domains and a second plurality of data domains and the instructions that, when executed by at least one of the one or more processors, cause at least one of the one or more processors to compute at least one metric of data quality for at least one data domain in the one or more data domains may further cause at least one of the one or more processors to: compute a first plurality of metrics of data quality for the first plurality of data domains; and compute a second plurality of metrics of data quality for the second plurality of data domains. In this case, at least one of the one or more memories may have further instructions stored thereon that, when executed by at least one of the one or more processors, cause at least one of the one or more processors to: determine a similarity between the first plurality of data domains and the second plurality of data domains based at least in part on the first plurality of metrics of data quality and the second plurality of metrics of data quality.

According to another aspect of the invention, there is provided at least one non-transitory computer-readable medium storing computer-readable instructions that, when executed by one or more computing devices, cause at least one of the one or more computing devices to, for each data object in one or more data objects: compute one or more syntactic match probabilities corresponding to one or more data domains, each syntactic match probability being based at least in part on a syntactic distance between the data object and a syntactic definition of a corresponding data domain; determine a plurality of characteristic probability values corresponding to each data domain in the one or more data domains, wherein each characteristic probability value corresponds to a probability of the data object having a characteristic of a corresponding data domain; determine a probability of the data object belonging to each of the one or more data domains based at least in part on a syntactic match probability corresponding to each data domain and the plurality of characteristic probability values corresponding to each data domain; and determine a data domain in the one or more data domains which corresponds to the data object based at least in part on the probability of the data object belonging to each of the one or more data domains.

In some embodiments, the at least one non-transitory computer-readable medium further stores computer-readable instructions that, when executed by at least one of the one or more computing devices, cause at least one of the one or more computing devices to, for each data object in the one or more data objects: determine one or more ratios of syntactic variations corresponding to the one or more domains, wherein each ratio of syntactic variations comprises a quantity of syntactic variations corresponding to each data domain divided by a total quantity of data domains; determine one or more contextual coefficients corresponding to the one or more data domains based at least in part on a comparison of one or more contextual factors associated with the data object and the corresponding one or more contextual factors associated with each data domain; and determine one or more quality coefficients corresponding to the one or more data domains, wherein each quality coefficient corresponding to each data domain indicates a likelihood that a data object matched to the data domain belongs to the data domain; wherein the probability of the data object belonging to each of the one or more data domains is determined based at least in part on a ratio of syntactic variations corresponding to each data domain, a contextual coefficient corresponding to each data domain, a quality coefficient corresponding to each data domain, the syntactic match probability corresponding to each data domain, and the plurality of characteristic probability values corresponding to each data domain. The one or more contextual factors may comprise one or more of: metadata associated with the data object or a characteristic of a data store associated with the data object. The probability of the data object belonging to each of the one or more data domains may comprisee a product of the ratio of syntactic variations corresponding to each data domain, the contextual coefficient corresponding to each data domain, the quality coefficient corresponding to each data domain, the divergence factor corresponding to each data domain, and the plurality of characteristic probability values corresponding to each data domain.

In some embodiments, the syntactic definition corresponding to each data domain comprises one or more alphabets and a positional map, wherein each position in the positional map corresponds to an alphabet in the one or more alphabets. The syntactic distance between the data object and the syntactic definition corresponding to each data domain may be computed by: initializing the syntactic distance to zero; incrementing the syntactic distance by one for every character in the data object which does not occur in an alphabet corresponding to a position of the character in the positional map; and incrementing the syntactic distance by a length differential between a length of the data object and a length of the positional map.

In some embodiments, the one or more data objects comprise a plurality of data objects and the non-transitory computer-readable medium further stores computer-readable instructions that, when executed by at least one of the one or more computing devices, cause at least one of the one or more computing devices to: compute at least one metric of data quality for at least one data domain in the one or more data domains based at least in part on a plurality of probabilities of the plurality of data objects belonging to the at least one data domain. The the instructions that, when executed by at least one of the one or more computing devices, cause at least one of the one or more computing devices to compute at least one metric of data quality for at least one data domain in the one or more data domains may further cause at least one of the one or more computing devices to: compute a standard deviation of a plurality of probabilities of the plurality of data objects belonging to the at least one data domain in the one or more data domains; compute a $t$ value based at least in part on the standard deviation and a mean probability of the plurality of probabilities; determine a degree of correlation between the plurality of data objects and the data domain based at least in part on a $t$-distribution and the $t$ value; determine at least one metric of data quality for at the least one data domain based at least in part on the degree of correlation. The one or more data domains may comprise a first plurality of data domains and a second plurality of data domains and the instructions that, when executed by at least one of the one or more computing devices, cause at least one of the one or more computing devices to compute at least one metric of data quality for at least one data domain in the one or more data domains may further cause at least one of the one or more computing devices to: compute a first plurality of metrics of data quality for the first plurality of data domains; and compute a second plurality of metrics of data quality for the second plurality of data domains. In this case, the at least one non-transitory computer-readable may further store computer-readable instructions that, when executed by at least one of the one or more computing devices, cause at least one of the one or more computing devices to: determine a similarity between the first plurality of data domains and the second plurality of data domains based at least in part on the first plurality of metrics of data quality and the second plurality of metrics of data quality.

**BRIEF DESCRIPTION OF THE DRAWINGS**

Fig. 1 illustrates a flowchart for determining a data domain of a data object according to an exemplary embodiment.
Fig. 2 illustrates an example of a data object according to an exemplary embodiment.
Fig. 3 illustrates an example of a data domain for California License Plates according to an exemplary embodiment.
Fig. 4 illustrates a chart showing the syntactic match probabilities that are computed between a set of two data objects and a set of four data domains according to an exemplary embodiment.
Fig. 5 illustrates a method for determining a syntactic distance between a data object and a syntactic definition corresponding to each data domain according to an exemplary embodiment.
Fig. 6 illustrates an example of the syntactic distance determination between a data object a syntactic definition for a data domain according to an exemplary embodiment.
Fig. 7 illustrates the characteristic probability value determination process for two data objects and two data domains according to an exemplary embodiment.
Fig. 8 illustrates the determination of characteristic probability values for a single data object and a single data domain according to an exemplary embodiment.

Fig. 9 illustrates another flowchart for determining a data domain of a data object which incorporates additional factors according to an exemplary embodiment.

Fig. 10 illustrates an example of the step of determining ratios of syntactic variations corresponding to one or more domains according to an exemplary embodiment.

Fig. 11 illustrates a flowchart for computing at least one metric of data quality for at least one data domain in the one or more data domains based at least in part on a plurality of probabilities of the plurality of data objects belonging to the at least one data domain according to an exemplary embodiment.

Fig. 12 illustrates a table of critical values for the Student's *t* distribution according to an exemplary embodiment.

Fig. 13 illustrates a flowchart for determining a similarity between a first plurality of data domains and a second plurality of data domains according to an exemplary embodiment.

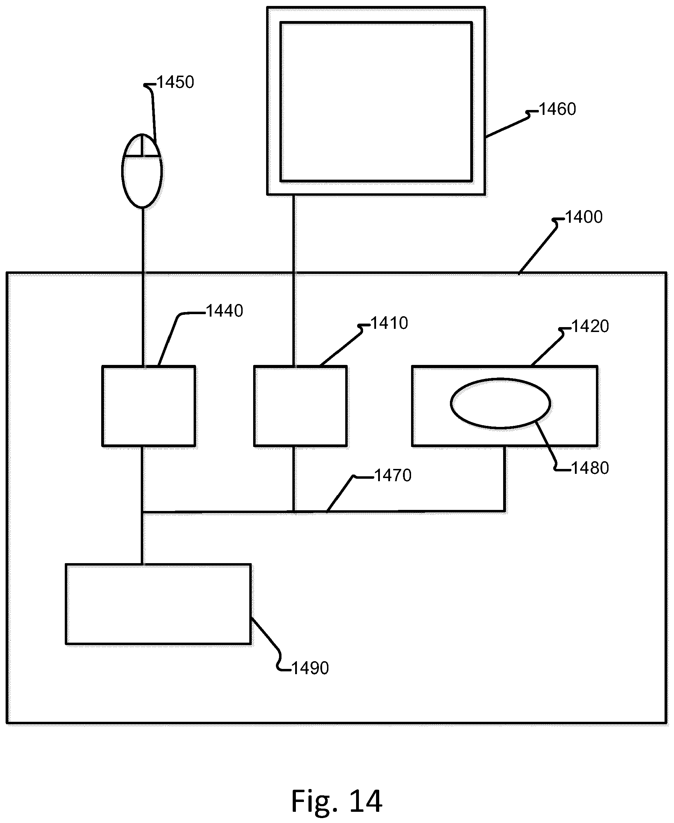

Fig. 14 illustrates an exemplary computing environment that can be used to carry out the method for determining a data domain of a data object.

## DETAILED DESCRIPTION

While methods, apparatuses, and computer-readable media are described herein by way of examples and embodiments, those skilled in the art recognize that methods, apparatuses, and computer-readable media for determining a data domain of a data object are not limited to the embodiments or drawings described. It should be understood that the drawings and description are not intended to be limited to the particular form disclosed. Rather, the intention is to cover all modifications, equivalents and alternatives falling within the spirit and scope of the appended claims. Any headings used herein are for organizational purposes only and are not meant to limit the scope of the description or the claims. As used herein, the word "can" is used in a permissive sense (i.e., meaning having the potential to) rather than the mandatory sense (i.e., meaning must). Similarly, the words "include," "including," and "includes" mean including, but not limited to.

Applicant has discovered a method, apparatus, and medium which alleviates low adaptability problems related to traditional data object profiling mechanisms. In particular, the present application introduces a profiling technology which is configured to produce multinomial classifications of data objects with an indication of closeness to the ideal model.

The methods for profiling disclosed herein can be implemented as part of a data profiling component, which can be software or hardware, and which can be implemented as a standalone system or be incorporated in an application such as, without a limitation, a data masking system.

The probabilistic methods of data profiling described herein can adhere to Bayesian reasoning by making a priori probabilistic assumptions and rejecting a null hypothesis ("accept") if further study of a data object in question disproves the null hypothesis. As a result each examined data object can associated with probability of being a member of a certain class ("data domain"). Said Bayesian reasoning can be implemented in a Bayesian inference engine. As discussed further below, upon completion of the examination, the data object can be associated with a data domain with a largest computed probability.

An important benefit of the disclosed method and system is an approach which minimizes expert input required to describe a data domain. This feature reduces time required for configuration of a data profiling system. Additionally, the disclosed method and system provides a dramatic simplification of a data domain description which is achieved by applying unsupervised machine learning methods to computing similarity between a data object instance and a data object model.

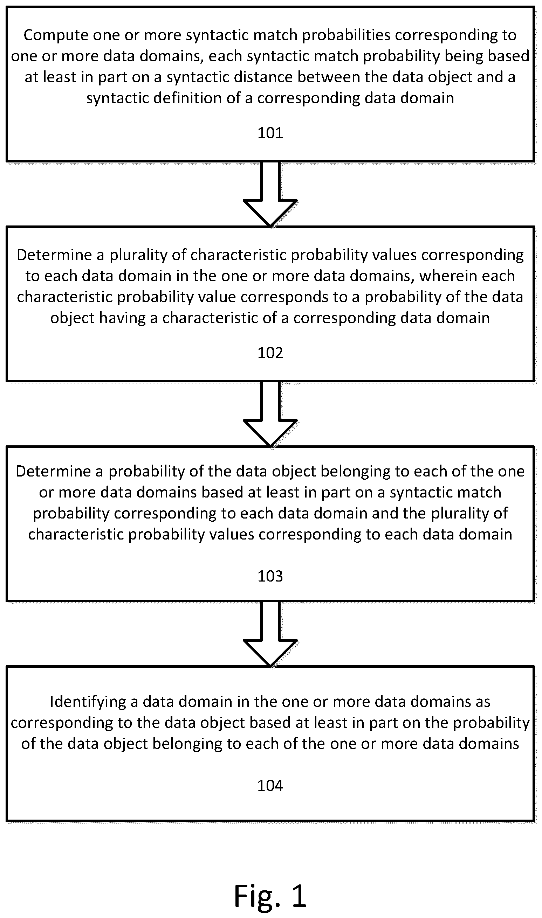

Fig. 1 illustrates a flowchart for determining a data domain of a data object according to an exemplary embodiment. The method illustrated in Fig. 1, including steps 101-104, can be performed for each data object in one or more data objects for which a data domain is to be determined.

The data objects which are profiled can be received or retrieved by the data profiling component from one or more data sources, such as databases, servers, user input, or from any computing device or software application. The data objects can be received in any format, for example, database entries, database columns, database rows, database tables, files, input from a user, or any other computer-readable format.

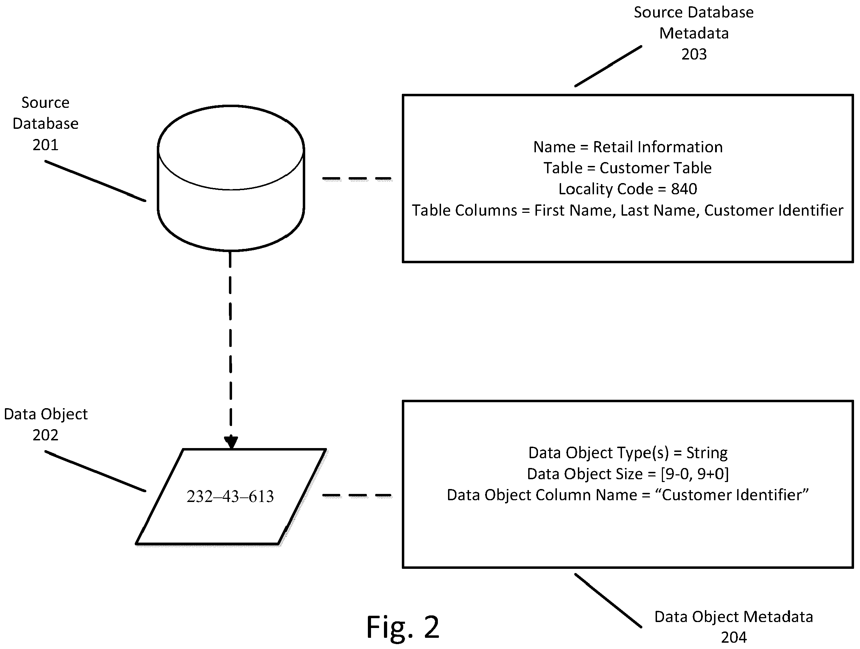

Data objects can include, without limitation, continuous numbers, discontinuous numbers, strings, symbols, or any combination of these. Data objects can also have associated metadata and characteristics which can be derived and/or extracted from the data object. Fig. 2 illustrates an example of a data object 202 according to an exemplary embodiment. As shown in Fig. 2, the data object has associated metadata 204, including data object type, size, and column name. Of course, these examples are for illustration only, and in many cases, the data object will not have this associated metadata. For example, a data object can be received without any metadata indicting whether it is a string or an integer, such a social security number which is formatted without any dashes.

As shown in Fig. 2, data object 202 is retrieved from source database 201, which has its own associated metadata 203. This metadata can include information about the database or the particular data structure from which the data object was retrieved 203, such as name, table, locality, and/or columns. In many cases, the source database metadata 203 will be packaged with and be part of the data object metadata 204. For example, the table value can be associated with the data object metadata. Additionally, the source database metadata 203 can be extracted or received by the profiling component to provide contextual clues which aid in determination of a data domain for the data object.

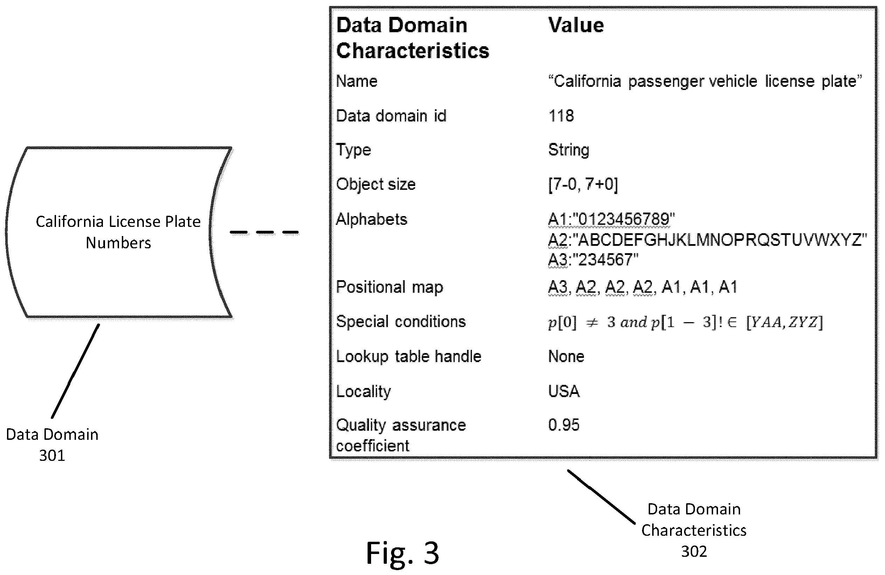

As used herein, a data domain refers to a data type which optionally can have associated constraints. Data domains can also include object classes, such as those used in object-oriented programming languages. Examples of data domains in databases can include a Social Security Number domain, an address domain, a name domain, etc. Fig. 3 illustrates an example of a data domain 301 for "California License Plates." As shown in Fig. 3, this data domain includes various data domain characteristics 302, which are described in additional detail below.

The data domain name is a human readable name of a data domain. The data domain name enables an analyst to associate a certain sematic with the instances of said data domain. Examples of data domain names are "US Social Security Number (SSN)", "VISA Credit Card Number," etc.

The data domain identifier ("id") is a unique identifier for all syntactic variations of a data domain notation. For example, a data domain for a US SSN can be represented by a 9-digit number, a 9-symbol character string, and an 11 characters long string comprised of three groups of digits 3, 2 and, 4 digits long respectively separated by a dash ("-") symbol. All of these data domains would have the same data domain id.

The data domain type is a data object interpretation hint. Data object types such as string, integer, date, timestamp, and others can enable narrowing of relevant data domains to a subset of data domains that match a type of a data object being profiled.

The data domain object size provides upper and lower data domain object instance size bounds and acceptable variations. For example, a string of either 9 or 11 characters long may represent a US SSN data domain object while a string between 6 and 11 characters long may represent a German passenger car license plate number. During profiling, data domain object size enables narrowing of relevant data domains to a subset which objects instances size satisfies stated limitations. In the example shown in Fig. 3, the lower bound for a California license plate is 7 and the upper bound is also 7, meaning all data objects in this domain must have a size of 7.

The list of alphabets comprises one more strings, each of which are comprised of the characters that make up the characters found in data objects of the data domain. Each alphabet can be a string comprising a sequence of characters with ascending or descending encoding in which next character's encoding exceeds previous character's encoding by 1 or more or decreases the previous character's encoding by 1 or more. For example, a sequence of characters "ABCD" in the ASCII encoding can be considered an alphabet while a sequence of characters "ABDE" can be considered to not comprise an alphabet. Alternatively, alphabets can be configured to not require a strict ordering or particular increment. For example, an alphabet can be the sequence of characters "DARZT." In the example shown in Fig. 3, the California license plate number utilizes three distinct alphabets, A1, A2, and A3, where A1 $\in$ "0123456789", A2 $\in$ "ABCDEFGHJKLMNOPRQSTUVWXYZ", and A3 $\in$ "234567."

A positional map is an array, each element of which indicates which alphabets are a source of characters at a given position in an object of the data domain. Each array element indicates at least one alphabet associated with a given position in the data domain object instance. The positions in the positional map are counted left to right with a leftmost position denoted as position 0. In the example shown in Fig. 3 of California license plate numbers, all objects of this domain adhere to the format [A3][A2][A2][A2][A1][A1][A1], where A1 $\in$ "0123456789", A2 $\in$ "ABCDEFGHJKLM-NOPRQSTUVWXYZ", and A3 $\in$ "234567." This means, for example, that a standard issue California license plate cannot start with the number "1."

Data domain special conditions are data domain-specific semantic rules. The data profiling component can utilize the special conditions to corroborate an input data object with the corresponding data domain-specific semantic rule. Data domain-specific rules can be provided or entered by an analyst with specialized domain knowledge. For example, while US SSN are generated randomly, US SSN strings may not have all "0" characters in any of the three parts which constitute a US SSN. As shown in Fig. 3, another example of a data domain specific rule is the absence of California passenger vehicles license plate numbers between 3YAA000 and 3ZYZ999, which is indicated by the special conditions $p[0] \neq 3$ and $p[1-3] ! \in [YAA, ZYZ]$. In yet another example, the two leftmost ABA routing number characters taken together cannot form a number between 81 and 99.

A lookup table handle is a designator of a list of known values associated with data domains of nominal type. Data objects in nominal data domains are not ordered or possess a distinguishable internal structure. Examples of nominal data domains include a list of world countries, a list of street names in a city, etc. Another type of nominal data domains is binary data domains such as gender designation: "M", "F", "male", "female."

Locality is an ISO 3166-1 locality code associated with the data domain. Locality code combined with a geographic location in which the input data object is evaluated can provide additional corroboration of the data object's profiling outcome. Examples of ISO 3166-1 locality codes are 840 - USA, 450 - Madagascar. In situations wherein the data domain is locality neutral, the locality code can be set to 0. Locality neutral data domains do not influence the outcome of a data object profiling process.

The quality coefficient estimates the input data object data domain identification quality in case of a match. This coefficient reflects commonality of a data domain representation by the data domain characteristics. In other words, the quality coefficient indicates a likelihood that a data object which matches the characteristics of the data domain belongs to the data domain. For example, a US SSN formatted as a 9-digit string can be assigned a default quality assurance coefficient 0.80 and a US SSN formatted as a 11 character string of 9 digits separated by two dash ("-") symbols in positions 4 and 7 counting from left is assigned a default quality assurance coefficient 0.99.

Of course, these characteristics are provided for illustration only, and a data domain may contain fewer or greater characteristics and/or different characteristics.

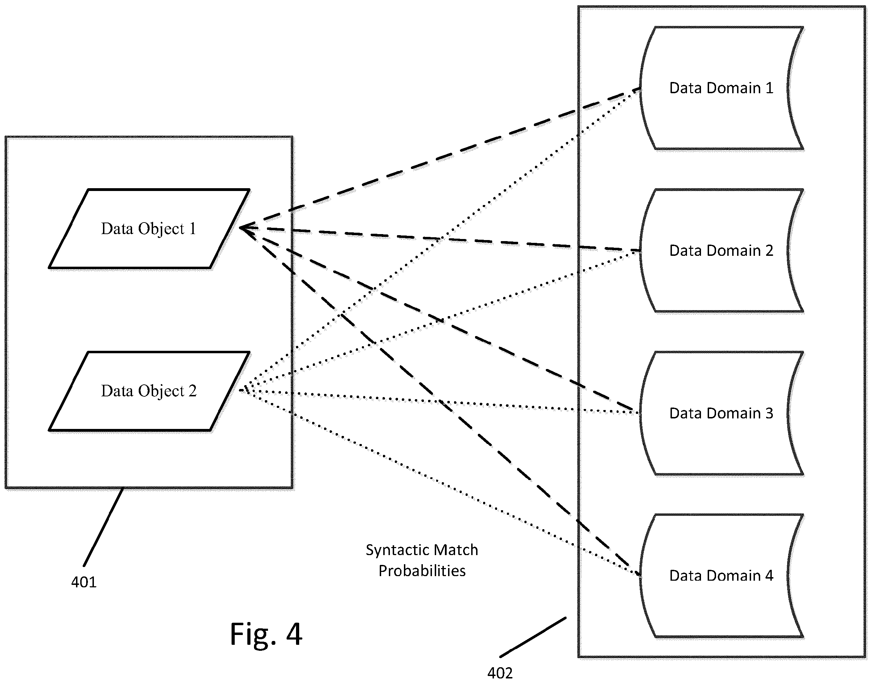

Returning to Fig. 1, at step 101 one or more syntactic match probabilities corresponding to one or more data domains are determined. Each syntactic match probability is based at least in part on a syntactic distance between the data object and a syntactic definition of a corresponding data domain. Fig. 4 illustrates a chart showing the syntactic match probabilities that are computed between a set of two data objects 401 and a set of four data domains 402. As shown in the figure, a syntactic match probability is computed between each data object and each of the data domains.

The syntactic definition of data domain can be expressed as one or more alphabets and a positional map, as discussed previously with respect to Fig. 3. Additionally, the syntactic definition can be expressed in any format which defines the syntax of data objects within a particular domain. In situations where no known syntactic definition exists for a particular domain, one can be created based upon the known data objects within that domain, such as by compiling the values occurring at each location of each data object to create alphabets and mapping alphabets to position locations to create a positional map.

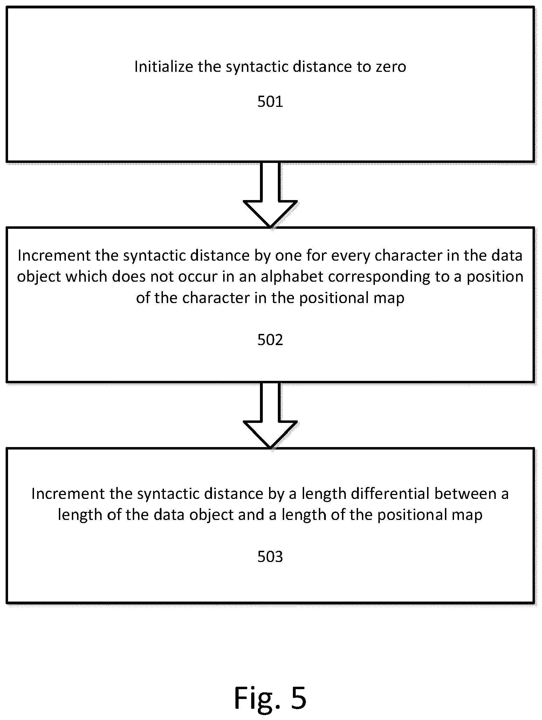

Fig. 5 illustrates a method for determining a syntactic distance between a data object and a syntactic definition corresponding to each data domain according to an exemplary embodiment. At step 501 the syntactic distance is initialized to zero. At step 502 the syntactic distance is incremented by one for every character in the data object which does not occur in an alphabet corresponding to a position of the character in the positional map. Additionally, at step 503 the syntactic distance is incremented by a length differential between a length of the data object and a length of the positional map. The length differential refers to a difference in length between the data object and the positional map and is the absolute value of the difference between the lengths of the data object and the positional map. Therefore, a data object which is two characters shorter than a positional map will have the same length differential as a data object which is two characters longer than a positional map.

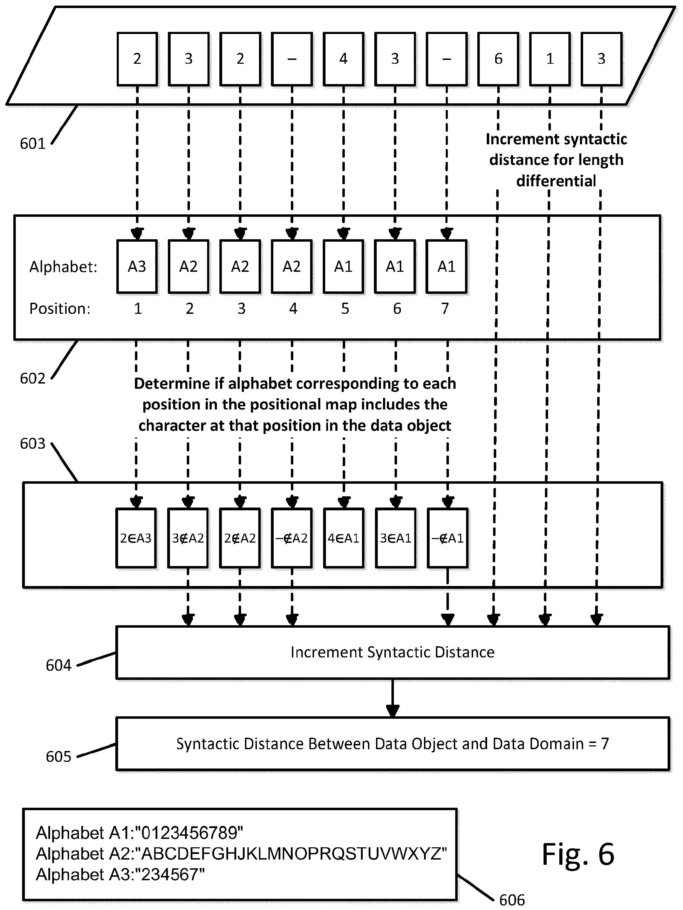

Fig. 6 illustrates an example of this syntactic distance determination between a data object 601 similar to the one shown in Fig. 2 and the syntactic definition for a data domain similar to the one shown in Fig. 3. The syntactic definition the data domain is given by alphabets 606 and positional map 602. As shown Fig. 6, a determination is made regarding whether the alphabet corresponding to each position in the positional map includes the character at that position in the data object. The output of this determination is shown in box 603.

For example, the data object 601 has a value of "2" at position 1. Based on positional map 602, the alphabet corresponding to position 1 is alphabet A3. As shown in in the list of alphabets, alphabet A3 includes the value "2." Therefore, a determination is made that the value of the data object at position 1 is included in the alphabet corresponding to position 1 ($2 \in A3$). In another example, the data object 601 has a value of "3" at position 2. Based on positional map 602, the alphabet corresponding to position 2 is alphabet A2. As shown in in the list of alphabets, alphabet A2 does not include the value "3." Therefore, a determination is made that the value of the data object at position 2 is not included in the alphabet corresponding to position 2 ($3 \notin A2$).

For every position in which the value of the data object at that position is not included in the alphabet corresponding to that position in the positional map, the syntactic distance is incremented, as shown in box 604. In the example shown in Fig. 6, this results in the syntactic distance being incremented by one for each of positions 2, 3, 4, and 7, resulting in a syntactic distance increment of four.

Additionally, the syntactic distance is incremented by the size of any length differential between the length of the data object 601 and the length of the positional map 602. As shown in Fig. 3, since there is a length differential of three, the syntactic distance is incremented three times. The end result is a syntactic distance of seven, as shown in box 605.

This syntactic distance can be used to compute a probabilistic variable $P(s)$, which is the syntactic match probability between the data object and the data domain. The syntactic match probability established by the means of a feature called "divergence factor" which is computed as the distance calculation discussed above. This syntactic distance, as explained earlier, is the distance of an input data object $a$ to a set of data objects generated by a list of alphabets and a positional map of a data domain. An example of such set is a collection of all US SSN instances, a collection of license plates issued for passenger automobiles in California, etc. The divergence factor is therefore a measure of closeness of the syntax of a sample data object and the syntax (as expressed by the syntactic definition) of a target set of the data objects in the data domain.

The syntactic distance calculation described with respect to Figs. 5-6, referred to as the Hausdorff distance, can be used to measure divergence between said input data object and a closed set generated by a positional map and

the alphabets:

$$df(a, S) = \text{infimum}\{df(a, s): s \in S\}$$

where $S$ is a non-empty set of data objects and s is the sample data object from which distance from said set of objects $S$ is being assessed. The set of data objects $S$ can differ from the data domain for which said input data object $a$ is considered for membership because the syntactic definition may not account for special conditions associated with the data domain. In other words, the closed set generated by a positional map and the alphabets can contain elements not permissible in said data domain $d$. For example, a set of alphabets and a positional map for the US SSN data domain generates values including those with all zeros in the second and the third group of characters.

As discussed with respect to Figs. 5-6, the distance from said input data object $a$ to said generated set of data objects $S$ is computed by summing up the number of characters in data object $a$ which cannot be mapped to a template of data objects in the set of data objects $S$ represented by the positional map. There is also an extra penalty for the length of sample $a$, $|a|$, not matching length of data objects $s \in S$, $|s|$: $abs$ ($|a|$- $|s|$. A total distance between a sample data object and the set of data objects $S$ is computed as a sum of the number of unmatched positions in the position map and the length penalty.

For example, distance between a 9-digit number representing a US SSN data object and a set of California license plates numbers (mxxxddd) is either 5 or 6: 3 unmatched characters (xxx are uppercase ASCII), the difference in size of 2 characters and a first digit potentially equal to 1 (m is a digit greater than 1).

A larger distance between said input data object and the set of data objects $S$ leads to a smaller probability of said input data object $a$ being a member of said set of data objects $S$. The syntactic match probability can be computed as:

$$P(s) = c_{norm} \tanh\left(\frac{n-d}{n}\right)$$

where $d$ is the distance between sample data object $a$ and a set of data objects $S$ (having member data objects $s$), $n = \max(|s|, |a|)$, and $c_{norm} = 1.313$. $c_{norm}$ is a normalization coefficient which ensures that syntactic match probability equals 1 when the distance between said input data object $a$ and said set of data objects $S$ is 0.

The above formula gives a longer data object with a few mismatched positions a better chance of being a member of a class of objects as opposed to short matching sets of data objects. This important property mitigates appearance of false positive matches of short partially matching data objects.

Of course, divergence metrics other than Hausdorff distance can be used for estimation of similarity between a data object and a set of data objects. Similarly, computation of the distance between a sample data object and a set of data objects may be carried out using an alternative approach while the probability of a match can be computed using a sigmoid or a similar function.

Returning to Fig. 1, at step 102 a plurality of characteristic probability values corresponding to each data domain in the one or more data domains are determined. Each characteristic probability value corresponds to a probability of the data object having a characteristic of a corresponding data domain.

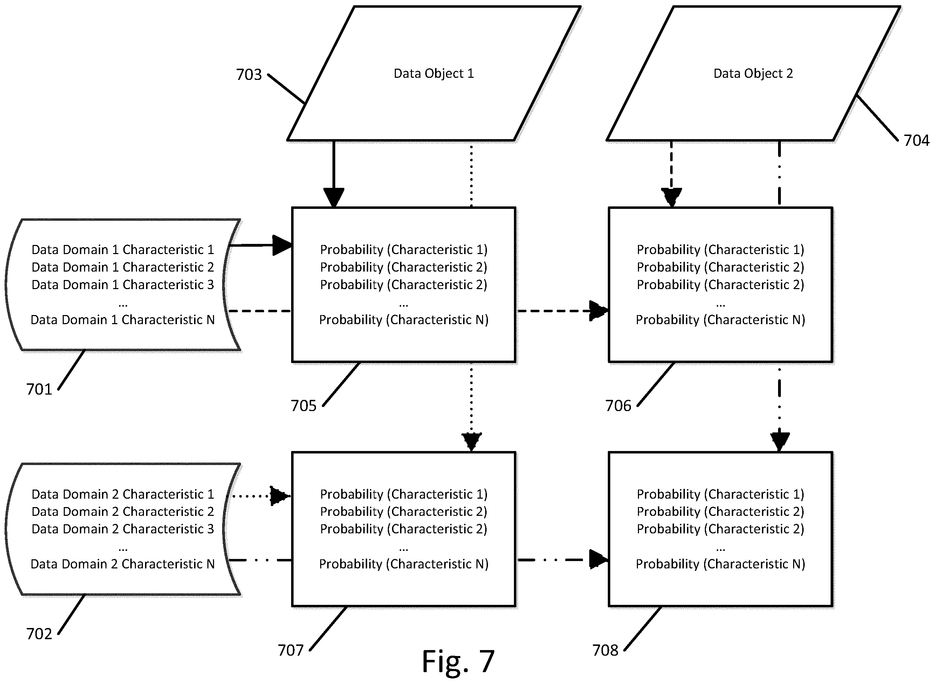

Fig. 7 illustrates the characteristic probability value determination process for two data objects 703 and 704 and two data domains 701 and 702. As shown by boxes 705, 706, 707, and 708 in Fig. 7, a plurality of characteristic probability values is determined for each combination of data object and data domain.

The characteristic probability value can be given by $P(\varphi_k|d)$, which is the probability of data object $\alpha$ having a $k$-th characteristic $\varphi_k$ of the data domain d. Data domain characteristics are responsible for adherence to semantics expressed by the means of the data domain special conditions. Probability values associated with semantic characteristics can be empirical and can be supplied by an analyst.

For example, a US SSN data domain instance may take a form of a 9-digit number, a 9-character string which represents a 9-digit number or a 11 character string containing 9 digits separated by two dash ("-") symbols in positions 4 and 7 counting from left. Semantically, none of the digit sequences may be comprised of only "0" sequences and the leftmost three digit sequence value cannot exceed 899. While syntactic characteristics of an input data object are verified by the means of the divergence factor/syntactic distance computation, an analyst can supply probabilities of a data domain match for semantic characteristics. Said empirical probabilities can reflect local data quality tolerance levels.

Alternatively, probability values can be determined based upon an automated comparison of characteristics of the data object which can be extracted from the data object and the characteristics associated with the data domain. For example, the probability values can be assigned by a probabilistic classifier or software module which relies upon a corpus of training data and analyzes the characteristics extracted from the data object in conjunction with the characteristics of the data domain.

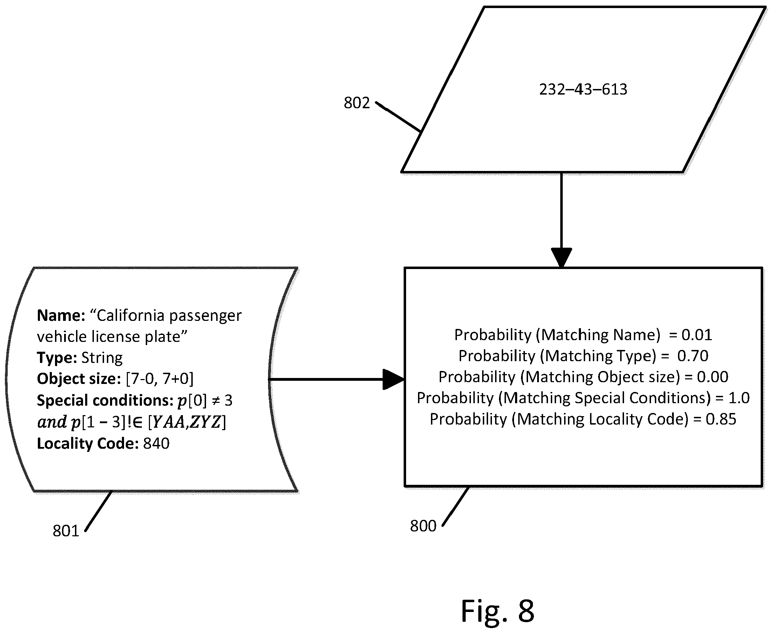

Fig. 8 illustrates the determination of characteristic probability values for a single data object and a single data domain. Data domain 801 includes the characteristics Name, Type, Object Size, Special conditions, and Locality Code. Data object 802 is comprised of the characters "232-43-613."

Box 800 illustrates the determined characteristic probability values for each characteristic of data domain 801. As shown in box 800, the characteristic probability value for the data object having a name matching the domain name is 1%. This indicates that there is a 1% chance that the characters "232-43-613" belong to a domain having the name "California passenger license plate." The characteristic probability value for the data object having a type matching the domain type is 70%. This indicates that there is a 70% chance that the characters "232-43-613" are a string (as opposed to, for example, a sequence of three independent numbers). The characteristic probability value for the data object having an object size matching the domain type is 0%. This is because the data object size of 10 is plainly greater than the upper bound size of 7 encoded in the data domain size characteristic. The characteristic probability value for the data object having special conditions matching the domain type is 100%. This can be, for example, because the data object 802 does not violate the special conditions of the data domain 801. Additionally, the characteristic probability value for the data object having a locality code matching the domain type is 85%. This can be based, for example, on an assessment that the format of the data code could fit the profile of a US SSN and therefore could likely have a locality code of 840, corresponding to the US.

Returning to Fig. 1, at step 103 a probability of the data object belonging to each of the one or more data domains is determined based at least in part on a syntactic match probability corresponding to each data domain and the plurality of characteristic probability values corresponding to each data domain.

The data profiling component can utilize a multinomial Naive Bayes model for its operation. Probability of an input data object *a* being a representative of data domain *d*, *P(d|a)*, can be computed as:

$$P(d|a) \propto P(s) \prod_{1 \leq k \leq n_d} P(\varphi_k|d)$$

where $P(s)$ is the syntactic match probability that is based on the divergence factor or syntactic distance, $n_d$ is the number of characteristics in data domain d, and $\prod_{1 \leq k \leq n_d} P(\varphi_k|d)$ is the product of all of the characteristic probability values of all of the characteristics in domain *d*.

At step 104 a data domain in the one or more data domains is determined which corresponds to the data object based at least in part on the probability of the data object belonging to each of the one or more data domains. This step can involve simply selecting the data domain with the highest associated probability out of all of the data domains as corresponding to the data object. This step can also include verifying that the probability associated with the highest ranking domain exceeds a minimum threshold. The minimum threshold can be set by an analyst and can be used to ensure that the data object is not linked to a data domain to which it has only a minimal probability of belonging. If the highest ranking domain does not exceed the minimum threshold, then a domain can be selected by the analyst.

Analyst intervention in the decision making process can also be requested when the number of potential data domains which have a probability of corresponding to the data object above a certain probability threshold exceeds a certain threshold. For example, if six different domains have a probability above 80 %, then an analyst can make a final determination regarding which domain to select as corresponding to the data object.

When user/analyst input is required, this step can include outputting one or more probabilities associated with one or more of the data domains (for example, the top N domains), along with relevant information about the domains, and determining a domain corresponding to the data object based upon a user selection of one of the domains outputted.

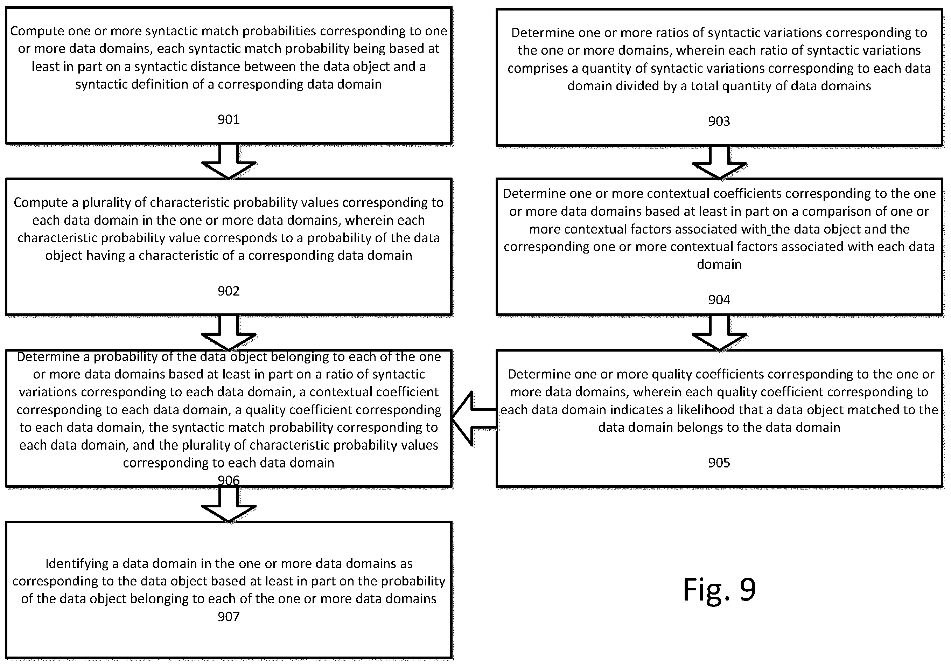

Fig. 9 illustrates another flowchart for determining a data domain of a data object which incorporates additional factors according to an exemplary embodiment. The method illustrated in Fig. 9, including steps 901-907, can be performed for each data object in one or more data objects for which a data domain is to be determined.

At step 901 one or more syntactic match probabilities corresponding to one or more data domains are computed, each syntactic match probability being based at least in part on a syntactic distance between the data object and a syntactic definition of a corresponding data domain. This step is similar to step 101 of Fig. 1, discussed above.

At step 902 a plurality of characteristic probability values corresponding to each data domain in the one or more data domains are determined, wherein each characteristic probability value corresponds to a probability of the data object having a characteristic of a corresponding data domain. This step is similar to step 102 of Fig. 1, discussed above.

At step 903 one or more ratios of syntactic variations, *P(d)*, corresponding to the one or more domains are determined. Each ratio of syntactic variations comprises a quantity of syntactic variations corresponding to each data domain divided by a total quantity of data domains.

A data domain syntactic variation is a pattern recognized as a representative of a given data domain. For example, in an exemplary collection of data domains US SSN may be represented by a 9-digit number, a 9-character sequence of decimal digits, a 9-character sequence of decimal digits with a dash symbol after the third and the fifth digits. In this case, the US SSN data domain can be considered to have three syntactic variations.

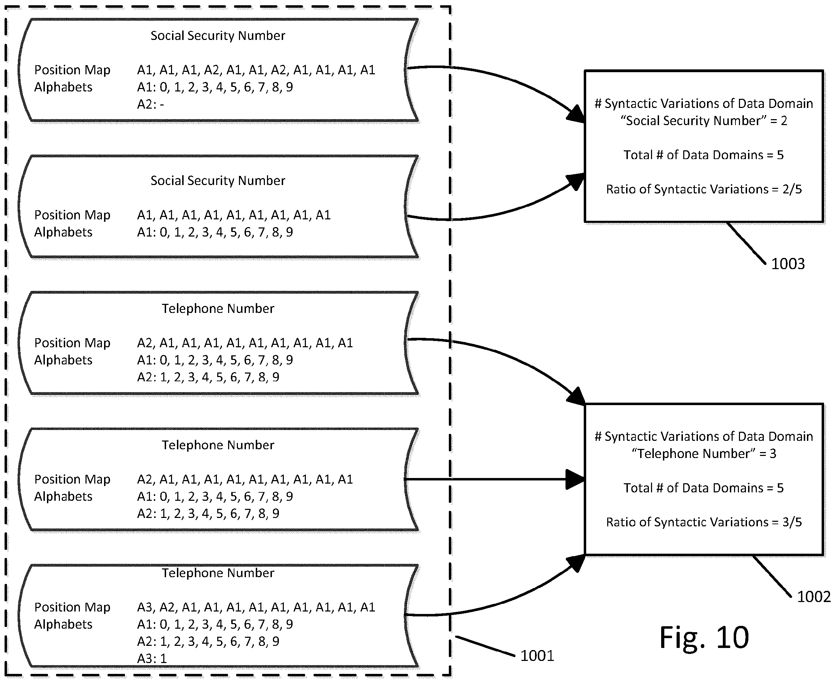

Fig. 10 illustrates an example of the step of determining ratios of syntactic variations corresponding to one or more domains according to an exemplary embodiment. There are five total domains 1001 in Fig. 10, including two syntactic variations of a US SSN domain and three syntactic variations of a telephone number domain. Therefore, the ratio of syntactic variations of the SSN domain is 2/5, as shown in box 1003, and the ratio of syntactic variations of the telephone number domain is 3/5, as shown in box 1002. The domain identifier, discussed with reference to Fig. 3, can be used to identify and aggregate syntactic variations of the same domain.

Returning to Fig. 9, at step 904 one or more contextual coefficients corresponding to the one or more data domains are determined based at least in part on a comparison of one or more contextual factors associated with the data object and the corresponding one or more contextual factors associated with each data domain.

The contextual coefficients, $P(c)$ fall in the range $0 < P(c) \leq 1$. The contextual coefficient can initially be set to $P(c) = 0.5$. The contextual coefficient increases when a data object's instance profiling context is supportive of the data object belonging to a particular data domain and decreases otherwise. In other words, the contextual coefficient reflects the influence of the context in which profiling of a given data object $a$ is taking place.

The factors which constitute data profiling context can include, without limitation, presence of known related information, metadata (such as the metadata associated with a data object and described with reference to Fig. 2), or external factors. For example, the contextual coefficient $P(c)$ can decrease by a certain factor if the default data domain locality, designated by its ISO 3166-1 code, is different from the current locality such as probability of a US SSN being present in a database in Japan. On the other hand, the contextual coefficient $P(c)$ can increase if one or more columns in a source database contain information related to the hypothesized type of the profiled data object such as probability of a US SSN being in a same database table as a person's first and last name.

At step 905 of Fig. 9 one or more quality coefficients corresponding to the one or more data domains are determined. As discussed earlier, each quality coefficient corresponding to each data domain indicates a likelihood that a data object matched to the data domain belongs to the data domain.

The quality coefficient, $P(q)$ falls in the range $0 < P(q) \leq 1$. This coefficient estimates the input data object data domain identification quality in case of a match and reflects commonality of a data domain representation by the data domain characteristics.

The quality coefficient can be assigned to data domains by analyst based on the analysts prior experience, or can be assigned through an automated process based upon an analysis of training data or previous data sets.

For example, a US SSN formatted as a 9-digit string can assigned a default quality assurance coefficient 0.80 and a US SSN formatted as a 11 character string of 9 digits separated by two dash ("-") symbols in positions 4 and 7 counting from left can be assigned a default quality assurance coefficient 0.99, meaning that the 11 character string is more likely to correspond to a US SSN. Similarly, a 16 digit number in 4 groups of 4 digits separated by spaces can be considered more likely to be a credit card number than just 16 digits, which may be an international phone number. This can result in the 16 digit number separated by spaces being assigned a quality coefficient of 0.99 and the non-spaced 16 digit number being assigned a quality coefficient of 0.9.

At step 906 of Fig. 9 a probability of the data object belonging to each of the one or more data domains is determined based at least in part on a ratio of syntactic variations corresponding to each data domain, a contextual coefficient corresponding to each data domain, a quality coefficient corresponding to each data domain, the syntactic match probability corresponding to each data domain, and the plurality of characteristic probability values corresponding to each data domain.

The data profiling component can utilize a multinomial Naïve Bayes model for its operation. Probability of an input data object $a$ being a representative of data domain $d$, $P(d|a)$, can be computed as:

$$P(d|a) \propto P(d)P(c)P(q)P(s) \prod_{1 \leq k \leq n_d} P(\varphi_k|d)$$

$P(d)$ is the ratio of syntactic variations and is given by $P(d) = \frac{N_d}{N}$, where $N$ is the total number of data domains in the collection of data domains, $N_d$ is the number of data domain $d$ syntactic variations in the collection of data domains.

$P(c)$ is the contextual coefficient, discussed earlier.

$P(q)$ is the quality coefficient, also discussed earlier.

$P(s)$ is the syntactic match probability that is based on the divergence factor or syntactic distance, $n_d$ is the number of characteristics in data domain $d$, and $\prod_{1 \leq k \leq nd} P(\varphi_k|d)$ is the product of all of the characteristic probability values of all of the characteristics in domain $d$.

At step 907 a data domain in the one or more data domains is determined which corresponds to the data object based at least in part on the probability of the data object belonging to each of the one or more data domains. This step can involve simply selecting the data domain with the highest associated probability out of all of the data domains as corresponding to the data object. This step can also include verifying that the probability associated with the highest ranking domain exceeds a minimum threshold. The minimum threshold can be set by an analyst and can be used to ensure that the data object is not linked to a data domain to which it has only a minimal probability of belonging. If the highest ranking domain does not exceed the minimum threshold, then a domain can be selected by the analyst.

Analyst intervention in the decision making process can also be requested when the number of potential data domains which have a probability of corresponding to the data object above a certain probability threshold exceeds a certain threshold. For example, if six different domains have a probability above 80 %, then an analyst can make a final determination regarding which domain to select as corresponding to the data object.

When user/analyst input is required, this step can include outputting one or more probabilities associated with one or more of the data domains (for example, the top N domains), along with relevant information about the domains, and determining a domain corresponding to the data object based upon a user selection of one of the domains outputted.

A result of the process performed by the data profiling component is a probability of said input data object $a$ being a member of said data domain $d$. In practice said input data object $a$ is matched against a plurality of data domains $D = \{d_i\}$, $i = 1, ..., k$ possibly resulting in a plurality of results $P(D) = \{p(a|d_j)\}, j = 1,...,r$ where $p(a|d_j)$ is a probability of said input data object $a$ being a member of data domain $d_j$.

The probabilistic method of data profiling disclosed herein can also be used to establish a metric of data quality. Consider a non-empty collection of a plurality of data objects $\hat{X} = \{x_i\}$, $i = 1,..., m$ which were determined to belong to data domain $X$. Application of said probabilistic method of data profiling to said plurality of data objects produces a plurality of probabilities, $\{p_i\}$, $i = 1, ..., m$, where $p_i$ is a probability of data object $x_i$ being a member of data domain $X$. As discussed below, the plurality probabilities can then be used to compute a metric of data quality metric for the data domain.

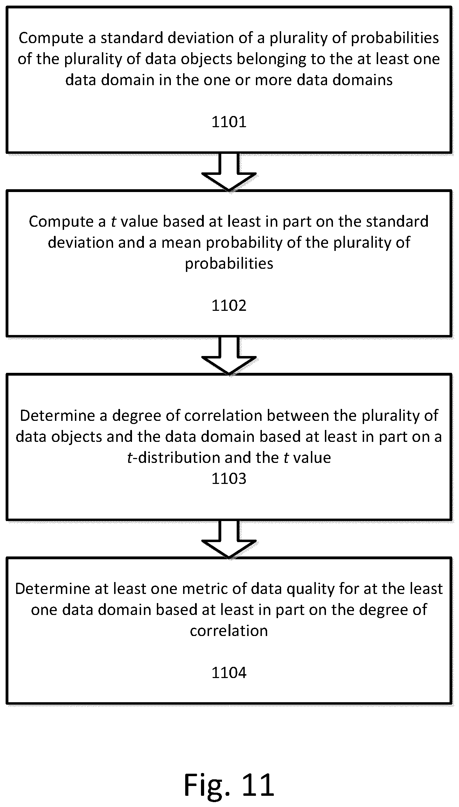

Fig. 11 illustrates a flowchart for computing at least one metric of data quality for at least one data domain in the one or more data domains based at least in part on a plurality of probabilities of the plurality of data objects belonging to the at least one data domain.

At step 1101 a standard deviation of a plurality of probabilities of the plurality of data objects belonging to the at least one data domain in the one or more data domains is computed. The standard deviation, $s_m$, of the collection of probabilities $p_i$ is given by the equation
$$s_m = \sqrt{\frac{1}{m}\sum_{i=1}^{m}(p_i - \bar{p})^2},$$
where $\bar{p}$ is the mean value of said collection of probabilities.

At step 1102 a $t$ value is computed based at least in part on the standard deviation and a mean probability of the plurality of probabilities. The $t$ value is computed as
$$t = \sqrt{m - 1}\,\frac{\bar{p}}{s_m}.$$

At step 1103 a degree of correlation between the plurality of data objects and the data domain is determined based at least in part on a $t$-distribution and the $t$ value.

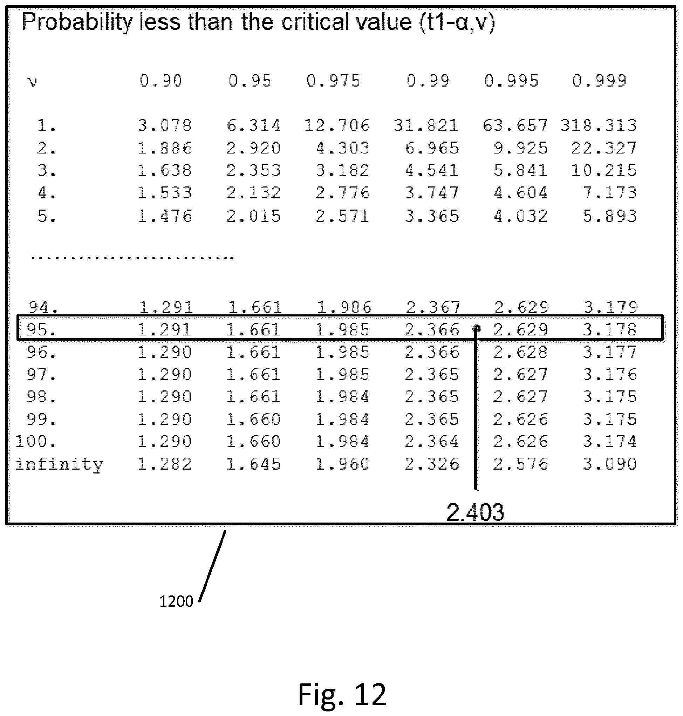

Referring to Fig. 12, an example of this step can include establishing a best achievable critical value from an entry in a table of critical values for the Student's $t$ distribution 300 with $v = m - 1$ degrees of freedom. For example, given the collection size $m = 96$ and $t$ value = 2.403, then when an appropriate entry is located in table 1200 a probability of the collection of data objects $\hat{X}$ being members of data domain $X$ is found by interpolating a table entry at the $t$ value. Referring to table 1200 of Fig. 12, since $m = 96$, then $v = 95$, and since the $t$ value of 2.403 for $v = 95$ lies between 0.99 and 0.995, then the probability of relationship between the plurality of data objects and data domain $X$ is estimated between 0.99 and 0.995. This indicates a high degree of correlation between the plurality of data objects and the data domain $X$

Returning to Fig. 11, at step 1104 at least one metric of data quality is determined for at the least one data domain based at least in part on the degree of correlation.

The degree of correlation between the plurality of data objects and the data domain can itself serve as the metric of data quality, in which case this step merely involves assigning the degree of correlation to serve as the metric of data quality. Using the above methods, a standard deviation of zero would indicate the highest possible metric of data quality.

Additionally, the metric of data quality can be represented by bands established by an analyst, with the bands expressing data quality in semantic terms. For example, when a degree of correlation for a plurality of data objects is below 0.9 then the data quality metric can be considered to be poor. When a degree of correlation for a plurality of data objects is above 0.90 but is below 0.97 then data quality metric can be considered to be medium. When a degree of correlation for a plurality of data objects exceeds 0.97 but is below 0.99 then the data quality metric can be considered to be good. When a degree of correlation for a plurality of data objects exceeds 0.99 then the data quality metric can be considered to be excellent.

Of course, other methods of data quality characterization can also be used based upon the degree of correlation. For example, the degree of correlation can be rescaled to some other interval such as [0,100] or a different number of ranges can be employed for a semantic data quality determination.

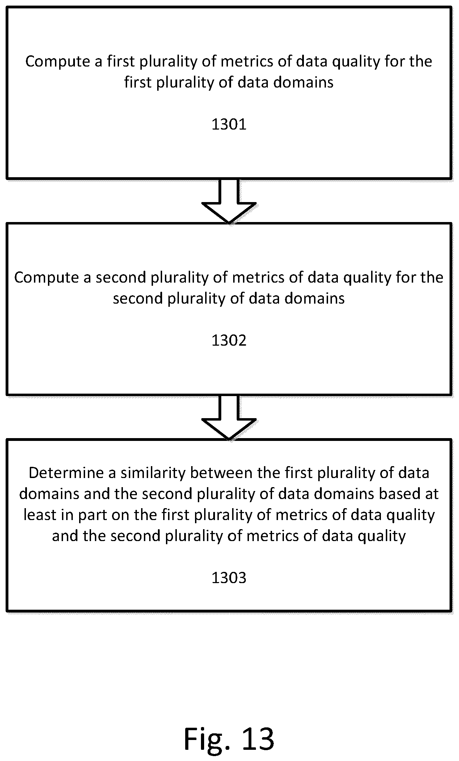

The data quality metric disclosed herein can be used to determine a similarity of a first plurality of data domains to a second plurality of data domains. Fig. 13 illustrates a flowchart for determining a similarity between a first plurality of data domains and a second plurality of data domains according to an exemplary embodiment.

At step 1301 a first plurality of metrics of data quality are computed for the first plurality of data domains. At step 1302 a second plurality of metrics of data quality are computed for the second plurality of data domains. The metrics of data quality can be computed as described with respect to Figs. 11-12.

At step 1303 a similarity is determined between the first plurality of data domains and the second plurality of data domains based at least in part on the first plurality of metrics of data quality and the second plurality of metrics of data quality. This step is explained in greater detail below.

Consider a plurality of data domains $A = \{d_i^A\}, i = 1 \dots n$ and a plurality of data domains $B = \{d_j^B\}, j = 1 \dots m$ and respective vector representations of computed data quality metrics $\overrightarrow{P_A} = (p_{d_1^A}, \dots, p_{d_n^A})$ and $\overrightarrow{P_B} = (p_{d_1^B}, \dots, p_{d_m^B})$, where $n$ and $m$ are the cardinality of data domains A and B respectively. In a next step extend each of said pluralities to a union of data domains present in said pluralities of data domains thus creating a third plurality of data domains quality metrics vector $\overrightarrow{P_{A*}}$ and a fourth plurality of data domains quality metrics vector $\overrightarrow{P_{B*}}$ of equal cardinality. Data domains from the second plurality of data domains not present in the first plurality of data domains are assigned data quality metric 0 in the third data domain. Data domains from the first plurality of data domains not present in the second plurality of data domains are assigned data quality metric 0 in the fourth data domain.

Similarity between said third and fourth pluralities of data domains can be established by computing cosine similarity between third and fourth data domains quality metrics vectors $\overrightarrow{P_{A*}}$ and $\overrightarrow{P_{B*}}$:

$$sim\left(\overrightarrow{P_{A*}}, \overrightarrow{P_{B*}}\right) = \frac{\overrightarrow{P_{A*}} \circ \overrightarrow{P_{B*}}}{|\overrightarrow{P_{A*}}||\overrightarrow{P_{B*}}|}$$

where the numerator is a dot product ("inner product") of said third and fourth data domains quality metrics vectors and the denominator is a product of said third and fourth data domains quality metrics vectors Euclidian length.

The similarity computation between third and fourth data domains quality metrics vectors also reflects similarity between the first and the second data domains quality metrics vectors which in turn establishes similarity between said pluralities of data domains A and B.

The first plurality of data domains can represent a predefined pattern such as a collection of data domains which comprise Personal Identification Information (PII). For such a predefined collection of data domains, the respective data domains quality metrics vector will be a unit vector with data quality metric 1 for each vector coordinate.

Computation of similarity between an arbitrary collection of data domains and a predefined collection of data domains can be illustrated by the following example. Consider a predefined collection of four data domains A, B, C and D and a database table in which columns containing values corresponding to data domains A, B and C have data quality metrics of 0.9, 0.95 and 0.99 respectively while data domain D is not present in said database table.

The inner product of the data quality metrics vectors is 0.9 * 1 + 0.95 * 1 + 0.99 * 1 + 0 * 1 = 2.84. Euclidian length of said predefined collection's vector is $\sqrt{4} = 2$ and Euclidian length of the data quality metrics vector of said database data domains is $\sqrt{0.9^2 + 0.95^2 + 0.99^2 + 0} = 1.64$. Similarity between the two collections of data domains is $\frac{2.84}{2*1.64} = 0.87$ which indicates that said collection of data domains in said database table is close to said predefined collection of data domains.

Of course, other methods of computing similarity between collections of data domains can be used. For example, a Pearson-r correlation-based similarity metric can be utilized for this purpose.

Additionally, by comparing a computed quality metrics vector for a plurality of data domains with a quality metrics vector of a predefined collection of data domains, a similarity can be established between the plurality of data domains and a predefined collection of data domains, thus enabling discovery of sensitive information in data repositories. In this case, the sensitive information data domain can be used as the predefined collection of data domains and used to compute a similarity with data domains stored in data repositories.

The timely discovery of sensitive information in disparate data repositories enables prevention of inference attacks in which an adversary capable of combining information from low sensitivity sources can reconstruct information of much higher sensitivity than the original information sensitivity. For example, by combining information from three databases each containing a fraction of personal information such as user full name, US Social Security number and a credit card number an adversary can impersonate the actual user while each of the above items taken separately is not sufficient for a successful impersonation attack.

Additionally, the method described above for determining data quality metrics and similarity between pluralities of data domains can be be produced by methods other than the specific probabilistic profiling methods disclosed herein. All that is required is a plurality of probabilities corresponding to the plurality of data domains.

One or more of the above-described techniques can be implemented in or involve one or more computer systems. Fig. 13 illustrates an example of a computing environment 1300. The computing environment 1300 is not intended to suggest any limitation as to scope of use or functionality of a described embodiment(s).

With reference to Fig. 13, the computing environment 1300 includes at least one processing unit 1310 and memory 1320. The processing unit 1310 executes computer-executable instructions and can be a real or a virtual processor. In a multi-processing system, multiple processing units execute computer-executable instructions to increase processing power. The memory 1320 can be volatile memory (e.g., registers, cache, RAM), non-volatile memory (e.g., ROM, EEPROM, flash memory, etc.), or some combination of the two. The memory 1320 can store software 1380 implementing described techniques.

A computing environment can have additional features. For example, the computing environment 1300 includes storage 1340, one or more input devices 1350, one or more output devices 1360, and one or more communication connections 1390. An interconnection mechanism 1370, such as a bus, controller, or network interconnects the components of the computing environment 1300. Typically, operating system software or firmware (not shown) provides an operating environment for other software executing in the computing environment 1300, and coordinates activities of the components of the computing environment 1300.

The storage 1340 can be removable or non-removable, and includes magnetic disks, magnetic tapes or cassettes, CD-ROMs, CD-RWs, DVDs, or any other medium which can be used to store information and which can be accessed within the computing environment 1300. The storage 1340 can store instructions for the software 1380.

The input device(s) 1350 can be a touch input device such as a keyboard, mouse, pen, trackball, touch screen, or game controller, a voice input device, a scanning device, a digital camera, remote control, or another device that provides input to the computing environment 1300. The output device(s) 1360 can be a display, television, monitor, printer, speaker, or another device that provides output from the computing environment 1300.

The communication connection(s) 1390 enable communication over a communication medium to another computing entity. The communication medium conveys information such as computer-executable instructions, audio or video information, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

Implementations can be described in the context of computer-readable media. Computer-readable media are any available media that can be accessed within a computing environment. By way of example, and not limitation, within the computing environment 1300, computer-readable media include memory 1320, storage 1340, communication media, and combinations of any of the above.

Of course, Fig. 13 illustrates computing environment 1300, display device 1360, and input device 1350 as separate devices for ease of identification only. Computing environment 1300, display device 1360, and input device 1350 can be separate devices (e.g., a personal computer connected by wires to a monitor and mouse), can be integrated in a single device (e.g., a mobile device with a touch-display, such as a smartphone or a tablet), or any combination of devices (e.g., a computing device operatively coupled to a touch-screen display device, a plurality of computing devices attached to a single display device and input device, etc.). Computing environment 1300 can be a set-top box, personal computer, or one or more servers, for example a farm of networked servers, a clustered server environment, or a cloud network of computing devices.

Having described and illustrated the principles of our invention with reference to the described embodiment, it will be recognized that the described embodiment can be modified in arrangement and detail without departing from such principles. Elements of the described embodiment shown in software can be implemented in hardware and vice versa.

In view of the many possible embodiments to which the principles of our invention can be applied, we claim as our invention all such embodiments as can come within the scope and spirit of the following claims and equivalents thereto.

**Claims**

1. A method executed by one or more computing devices for determining a data domain of a data object, the method comprising, for each data object in one or more data objects:

   computing one or more syntactic match probabilities corresponding to one or more data domains, each syntactic match probability being based at least in part on a syntactic distance between the data object and a syntactic definition of a corresponding data domain;
   determining a plurality of characteristic probability values corresponding to each data domain in the one or more data domains, wherein each characteristic probability value corresponds to a probability of the data object having a characteristic of a corresponding data domain;
   determining a probability of the data object belonging to each of the one or more data domains based at least in part on a syntactic match probability corresponding to each data domain and the plurality of characteristic probability values corresponding to each data domain; and
   determining a data domain in the one or more data domains which corresponds to the data object based at least in part on the probability of the data object belonging to each of the one or more data domains.

2. The method of claim 1, further comprising, for each data object in the one or more data objects:

   determining one or more ratios of syntactic variations corresponding to the one or more domains, wherein each ratio of syntactic variations comprises a quantity of syntactic variations corresponding to each data domain divided by a total quantity of data domains;
   determining one or more contextual coefficients corresponding to the one or more data domains based at least in part on a comparison of one or more contextual factors associated with the data object and the corresponding one or more contextual factors associated with each data domain; and
   determining one or more quality coefficients corresponding to the one or more data domains, wherein each quality coefficient corresponding to each data domain indicates a likelihood that a data object matched to the data domain belongs to the data domain;
   wherein the probability of the data object belonging to each of the one or more data domains is determined based at least in part on a ratio of syntactic variations corresponding to each data domain, a contextual coefficient corresponding to each data domain, a quality coefficient corresponding to each data domain, the syntactic match probability corresponding to each data domain, and the plurality of characteristic probability values corresponding to each data domain.

3. The method of claim 2, wherein the one or more contextual factors comprise one or more of: metadata associated with the data object or a characteristic of a data store associated with the data object.

4. The method of any one of claims 2-3, wherein the probability of the data object belonging to each of the one or more data domains comprises a product of the ratio of syntactic variations corresponding to each data domain, the contextual coefficient corresponding to each data domain, the quality coefficient corresponding to each data domain, the divergence factor corresponding to each data domain, and the plurality of characteristic probability values corresponding to each data domain.

5. The method of any one of claims 1-4, wherein the syntactic definition corresponding to each data domain comprises one or more alphabets and a positional map and wherein each position in the positional map corresponds to an alphabet in the one or more alphabets.

6. The method of claim 5, wherein the syntactic distance between the data object and the syntactic definition corresponding to each data domain is computed by:

   initializing the syntactic distance to zero;
   incrementing the syntactic distance by one for every character in the data object which does not occur in an alphabet corresponding to a position of the character in the positional map; and
   incrementing the syntactic distance by a length differential between a length of the data object and a length of the positional map.

7. The method of any one of claims 1-6, wherein the one or more data objects comprise a plurality of data objects and further comprising:

computing at least one metric of data quality for at least one data domain in the one or more data domains based at least in part on a plurality of probabilities of the plurality of data objects belonging to the at least one data domain.

8. The method of claim 7, wherein computing at least one metric of data quality for at least one data domain in the one or more data domains comprises:

computing a standard deviation of a plurality of probabilities of the plurality of data objects belonging to the at least one data domain in the one or more data domains;
computing a t value based at least in part on the standard deviation and a mean probability of the plurality of probabilities;
determining a degree of correlation between the plurality of data objects and the data domain based at least in part on a *t*-distribution and the t value;
determining at least one metric of data quality for at the least one data domain based at least in part on the degree of correlation.

9. The method of any one of claims 7-8, wherein the one or more data domains comprise a first plurality of data domains and a second plurality of data domains and wherein computing at least one metric of data quality for at least one data domain in the one or more data domains comprises:

computing a first plurality of metrics of data quality for the first plurality of data domains; and
computing a second plurality of metrics of data quality for the second plurality of data domains.

10. The method of claim 9, further comprising:
determining a similarity between the first plurality of data domains and the second plurality of data domains based at least in part on the first plurality of metrics of data quality and the second plurality of metrics of data quality.

11. A computer program which, when executed by one or more processors, causes the one or more processors to carry out a method according to any one of the preceding claims.

12. An apparatus arranged to carry out a method according to any one of claims 1 to 10.

Compute one or more syntactic match probabilities corresponding to one or more data domains, each syntactic match probability being based at least in part on a syntactic distance between the data object and a syntactic definition of a corresponding data domain

101

Determine a plurality of characteristic probability values corresponding to each data domain in the one or more data domains, wherein each characteristic probability value corresponds to a probability of the data object having a characteristic of a corresponding data domain

102

Determine a probability of the data object belonging to each of the one or more data domains based at least in part on a syntactic match probability corresponding to each data domain and the plurality of characteristic probability values corresponding to each data domain

103

Identifying a data domain in the one or more data domains as corresponding to the data object based at least in part on the probability of the data object belonging to each of the one or more data domains

104

Fig. 1

Fig. 2

Source Database
201

Source Database
Metadata
203

Name = Retail Information
Table = Customer Table
Locality Code = 840
Table Columns = First Name, Last Name, Customer Identifier

Data Object
202

232–43–613

Data Object Type(s) = String
Data Object Size = [9-0, 9+0]
Data Object Column Name = "Customer Identifier"

Data Object Metadata
204

EP 3 428 813 A1

| Data Domain Characteristics | Value |
|---|---|
| Name | "California passenger vehicle license plate" |
| Data domain id | 118 |
| Type | String |
| Object size | [7-0, 7+0] |
| Alphabets | A1:"0123456789"<br>A2:"ABCDEFGHJKLMNOPRQSTUVWXYZ"<br>A3:"234567" |
| Positional map | A3, A2, A2, A2, A1, A1, A1 |
| Special conditions | $p[0] \neq 3 \, and \, p[1-3]! \in [YAA, ZYZ]$ |
| Lookup table handle | None |
| Locality | USA |
| Quality assurance coefficient | 0.95 |

California License Plate Numbers

— — —

Data Domain
301

Data Domain Characteristics
302

Fig. 3

EP 3 428 813 A1

Data Domain 1

Data Domain 2

Data Domain 3

Data Domain 4

402

Syntactic Match
Probabilities

Data Object 1

Data Object 2

401

Fig. 4

Initialize the syntactic distance to zero

501

Increment the syntactic distance by one for every character in the data object which does not occur in an alphabet corresponding to a position of the character in the positional map

502

Increment the syntactic distance by a length differential between a length of the data object and a length of the positional map

503

# Fig. 5

| 2 | 3 | 2 | – | 4 | 3 | – | 6 | 1 | 3 |

601

**Increment syntactic distance for length differential**

| Alphabet: | A3 | A2 | A2 | A2 | A1 | A1 | A1 |
| Position: | 1 | 2 | 3 | 4 | 5 | 6 | 7 |

602

**Determine if alphabet corresponding to each position in the positional map includes the character at that position in the data object**

603

| 2∈A3 | 3∉A2 | 2∉A2 | –∉A2 | 4∈A1 | 3∈A1 | –∉A1 |

Increment Syntactic Distance

604

Syntactic Distance Between Data Object and Data Domain = 7

605

Alphabet A1:"0123456789"
Alphabet A2:"ABCDEFGHJKLMNOPRQSTUVWXYZ"
Alphabet A3:"234567"

**Fig. 6**

606

703 — Data Object 1

Data Object 2 — 704

701

Data Domain 1 Characteristic 1
Data Domain 1 Characteristic 2
Data Domain 1 Characteristic 3
...
Data Domain 1 Characteristic N

Probability (Characteristic 1)
Probability (Characteristic 2)
Probability (Characteristic 2)
...
Probability (Characteristic N)

705

Probability (Characteristic 1)
Probability (Characteristic 2)
Probability (Characteristic 2)
...
Probability (Characteristic N)

706

702

Data Domain 2 Characteristic 1
Data Domain 2 Characteristic 2
Data Domain 2 Characteristic 3
...
Data Domain 2 Characteristic N

Probability (Characteristic 1)
Probability (Characteristic 2)
Probability (Characteristic 2)
...
Probability (Characteristic N)

707

Probability (Characteristic 1)
Probability (Characteristic 2)
Probability (Characteristic 2)
...
Probability (Characteristic N)

708

Fig. 7

802

232–43–613

800

Probability (Matching Name)  = 0.01
Probability (Matching Type) =  0.70
Probability (Matching Object size) = 0.00
Probability (Matching Special Conditions) = 1.0
Probability (Matching Locality Code) = 0.85

801

**Name:** "California passenger vehicle license plate"
**Type:** String
**Object size:** [7-0, 7+0]
**Special conditions:** $p[0] \neq 3$ $and\ p[1-3]! \in [YAA,ZYZ]$
**Locality Code:** 840

Fig. 8

Compute one or more syntactic match probabilities corresponding to one or more data domains, each syntactic match probability being based at least in part on a syntactic distance between the data object and a syntactic definition of a corresponding data domain

901

Determine one or more ratios of syntactic variations corresponding to the one or more domains, wherein each ratio of syntactic variations comprises a quantity of syntactic variations corresponding to each data domain divided by a total quantity of data domains

903

Compute a plurality of characteristic probability values corresponding to each data domain in the one or more data domains, wherein each characteristic probability value corresponds to a probability of the data object having a characteristic of a corresponding data domain

902

Determine one or more contextual coefficients corresponding to the one or more data domains based at least in part on a comparison of one or more contextual factors associated with the data object and the corresponding one or more contextual factors associated with each data domain

904

Determine a probability of the data object belonging to each of the one or more data domains based at least in part on a ratio of syntactic variations corresponding to each data domain, a contextual coefficient corresponding to each data domain, a quality coefficient corresponding to each data domain, the syntactic match probability corresponding to each data domain, and the plurality of characteristic probability values corresponding to each data domain

906

Determine one or more quality coefficients corresponding to the one or more data domains, wherein each quality coefficient corresponding to each data domain indicates a likelihood that a data object matched to the data domain belongs to the data domain

905

Identifying a data domain in the one or more data domains as corresponding to the data object based at least in part on the probability of the data object belonging to each of the one or more data domains

907

Fig. 9

EP 3 428 813 A1

**Social Security Number**

Position Map          A1, A1, A1, A2, A1, A1, A2, A1, A1, A1, A1
Alphabets             A1: 0, 1, 2, 3, 4, 5, 6, 7, 8, 9
                      A2: -

**Social Security Number**

Position Map          A1, A1, A1, A1, A1, A1, A1, A1, A1
Alphabets             A1: 0, 1, 2, 3, 4, 5, 6, 7, 8, 9

**Telephone Number**

Position Map          A2, A1, A1, A1, A1, A1, A1, A1, A1, A1
Alphabets             A1: 0, 1, 2, 3, 4, 5, 6, 7, 8, 9
                      A2: 1, 2, 3, 4, 5, 6, 7, 8, 9

**Telephone Number**

Position Map          A2, A1, A1, A1, A1, A1, A1, A1, A1, A1
Alphabets             A1: 0, 1, 2, 3, 4, 5, 6, 7, 8, 9
                      A2: 1, 2, 3, 4, 5, 6, 7, 8, 9

**Telephone Number**

Position Map          A3, A2, A1, A1, A1, A1, A1, A1, A1, A1, A1
Alphabets             A1: 0, 1, 2, 3, 4, 5, 6, 7, 8, 9
                      A2: 1, 2, 3, 4, 5, 6, 7, 8, 9
                      A3: 1

\# Syntactic Variations of Data Domain
"Social Security Number" = 2

Total \# of Data Domains = 5

Ratio of Syntactic Variations = 2/5

1003

\# Syntactic Variations of Data Domain
"Telephone Number" = 3

Total \# of Data Domains = 5

Ratio of Syntactic Variations = 3/5

1002

1001

Fig. 10

Compute a standard deviation of a plurality of probabilities of the plurality of data objects belonging to the at least one data domain in the one or more data domains

1101

Compute a $t$ value based at least in part on the standard deviation and a mean probability of the plurality of probabilities

1102

Determine a degree of correlation between the plurality of data objects and the data domain based at least in part on a $t$-distribution and the $t$ value
1103

Determine at least one metric of data quality for at the least one data domain based at least in part on the degree of correlation

1104

Fig. 11

Probability less than the critical value (t1-α,v)

| ν | 0.90 | 0.95 | 0.975 | 0.99 | 0.995 | 0.999 |
|---|------|------|-------|------|-------|-------|
| 1. | 3.078 | 6.314 | 12.706 | 31.821 | 63.657 | 318.313 |
| 2. | 1.886 | 2.920 | 4.303 | 6.965 | 9.925 | 22.327 |
| 3. | 1.638 | 2.353 | 3.182 | 4.541 | 5.841 | 10.215 |
| 4. | 1.533 | 2.132 | 2.776 | 3.747 | 4.604 | 7.173 |
| 5. | 1.476 | 2.015 | 2.571 | 3.365 | 4.032 | 5.893 |
| ......................... | | | | | | |
| 94. | 1.291 | 1.661 | 1.986 | 2.367 | 2.629 | 3.179 |
| 95. | 1.291 | 1.661 | 1.985 | 2.366 | 2.629 | 3.178 |
| 96. | 1.290 | 1.661 | 1.985 | 2.366 | 2.628 | 3.177 |
| 97. | 1.290 | 1.661 | 1.985 | 2.365 | 2.627 | 3.176 |
| 98. | 1.290 | 1.661 | 1.984 | 2.365 | 2.627 | 3.175 |
| 99. | 1.290 | 1.660 | 1.984 | 2.365 | 2.626 | 3.175 |
| 100. | 1.290 | 1.660 | 1.984 | 2.364 | 2.626 | 3.174 |
| infinity | 1.282 | 1.645 | 1.960 | 2.326 | 2.576 | 3.090 |

2.403

1200

Fig. 12

Compute a first plurality of metrics of data quality for the first plurality of data domains

1301

Compute a second plurality of metrics of data quality for the second plurality of data domains

1302

Determine a similarity between the first plurality of data domains and the second plurality of data domains based at least in part on the first plurality of metrics of data quality and the second plurality of metrics of data quality

1303

Fig. 13

Fig. 14

Europäisches
Patentamt

European
Patent Office

Office européen
des brevets

# EUROPEAN SEARCH REPORT

Application Number

EP 18 18 2605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/066214 A1 (NELKE SEBASTIAN [DE] ET AL) 15 March 2012 (2012-03-15)<br>* abstract; figure 1 *<br>* paragraph [0024] *<br>* paragraph [0027] *<br>* paragraph [0046]; figure 3 * | 1-12 | INV.<br>G06F17/30 |
| X | US 2013/091138 A1 (LIENSBERGER CHRISTIAN [US] ET AL) 11 April 2013 (2013-04-11)<br>* abstract; figure 2 *<br>* paragraph [0003] - paragraph [0005] * | 1-12 | |
| X | US 2013/238596 A1 (MANDELSTEIN DAN J [US] ET AL) 12 September 2013 (2013-09-12)<br>* abstract; figure 1 *<br>* claim 1 * | 1-12 | |
| X | US 2004/024755 A1 (RICKARD JOHN TERRELL [US]) 5 February 2004 (2004-02-05)<br>* paragraph [0039] - paragraph [0043] *<br>* paragraph [0085] - paragraph [0090]; figures 1-3 * | 1-12 | TECHNICAL FIELDS SEARCHED (IPC)<br><br>G06F |

The present search report has been drawn up for all claims

| Place of search | Date of completion of the search | Examiner |
|---|---|---|
| Munich | 22 October 2018 | Deane, Inigo |

## ANNEX TO THE EUROPEAN SEARCH REPORT
## ON EUROPEAN PATENT APPLICATION NO.

EP 18 18 2605

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2018

| Patent document cited in search report | | Publication date | Patent family member(s) | | Publication date |
|---|---|---|---|---|---|
| US 2012066214 | A1 | 15-03-2012 | CN 103080924 A | | 01-05-2013 |
| | | | EP 2616960 A2 | | 24-07-2013 |
| | | | JP 5785617 B2 | | 30-09-2015 |
| | | | JP 2013541754 A | | 14-11-2013 |
| | | | US 2012066214 A1 | | 15-03-2012 |
| | | | WO 2012034733 A2 | | 22-03-2012 |
| US 2013091138 | A1 | 11-04-2013 | NONE | | |
| US 2013238596 | A1 | 12-09-2013 | US 2013238596 A1 | | 12-09-2013 |
| | | | US 2014006339 A1 | | 02-01-2014 |
| US 2004024755 | A1 | 05-02-2004 | AU 2003258019 A1 | | 23-02-2004 |
| | | | US 2004024755 A1 | | 05-02-2004 |
| | | | WO 2004013772 A2 | | 12-02-2004 |

**EP 3 428 813 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 15591661 A

- WO 15161586 A